# EUROPÄISCHE PATENTANMELDUNG

(11) **EP 2 703 366 A1**
(43) Veröffentlichungstag der Anmeldung: **05.03.2014**
(21) Anmeldenummer: 13178713.7
(22) Anmeldetag: 31.07.2013
(51) Int. Cl.: C02F 11/12, B01D 29/11, B01D 36/02

(54) **Vorrichtung zur Fest-Flüssig-Trennung von Stoffgemischen und Suspensionen**

(30) Priorität: 29.08.2012 DE 202012008238 U
(71) Anmelder: Bähr, Albert, 66564 Ottweiler (DE)
(72) Erfinder: Bähr, Albert, 66564 Ottweiler (DE)
(74) Vertreter: Beck, Alexander

(57) **Zusammenfassung**

Vorrichtung zur Fest-Flüssig-Trennung von Stoffgemischen und Suspensionen mit einer Einspeisung und mindestens einer einspeisungsseitig angeordneten vertikalen Filtrationskammer (2, 3), an deren Ausgang mindestens eine Pumpvorrichtung (6) zum Abziehen des eingedickten Restvolumens aus der Filtrationskammer(2) und zum Erzeugen eines Pumpendrucks angeschlossen ist, und die Pumpvorrichtung (6) über Verbindungsleitungen (10) mit einer oder mehreren geschlossenen Press-Druck-Kammern (8) verbunden ist, bei der zwei parallel geschaltete Filtrationskammern (2, 3) vorgesehen sind, die über Ventileinrichtungen jeweils einzeln eingangsseitig mit der Einspeisung und ausgangseitig über die Pumpvorrichtung (6) mit einer oder mehreren Press-Druck-Kammern (8) verbunden sind.

## Beschreibung

### I. Anwendungsgebiet

Die vorliegende Erfindung betrifft eine Vorrichtung zur Fest-Flüssig-Trennung von Stoffgemischen und Suspensionen.

Eine diesbezüglich gattungsbildende Vorrichtung ist bereits aus der DE 10 2008 047 427.4 bekannt. Diese zeigt eine Vorrichtung zur Fest-Flüssig-Trennung von Stoffgemischen und Suspensionen mit einer Einspeisung und einer einspeisungsseitig angeordneten vertikalen Filtrationskammer, an deren Ausgang mindestens eine Pumpvorrichtung zum Abziehen des eingedickten Restvolumens aus der Filtrationskammer und zum Erzeugen eines Pumpendrucks angeschlossen ist, wobei die Pumpvorrichtung über Verbindungsleitungen mit einer oder mehreren geschlossen Press-Druck-Kammern verbunden ist.

Die gattungsbildende Vorrichtung erlaubt es zwar, einen nahezu pseudokontinuierlichen Betrieb zu fahren, da die Filtrationskammer fast ständig zur Aufnahme von zu trennenden Stoffgemischen bereit ist. Dennoch muss gemäß dem Stand der Technik eine Unterbrechung der Zuführung oder eine Zwischenspeicherung vorgesehen sein, da die Filtrationskammer regelmäßig entleert und gereinigt werden muss.

Ausgehend hiervon ist es Aufgabe der vorliegenden Erfindung, eine gattungsgemäße Vorrichtung zur Fest-Flüssig-Trennung von Stoffgemischen dergestalt weiterzubilden, dass eine voll kontinuierliche Aufnahme der zu trennenden Stoffgemische oder Suspensionen möglich ist.

Erfindungsgemäß wird diese Aufgabe durch eine gattungsgemäße Vorrichtung zur Fest-Flüssig-Trennung von Stoffgemischen und Suspensionen gelöst, bei der zwei parallel geschaltete Filtrationskammern vorgesehen sind, die über Ventileinrichtungen einzeln eingangsseitig mit der Einspeisung und ausgangsseitig über die Pumpvorrichtung mit einer oder mehreren PressDruck-Kammern verbunden sind.

Auf diese Weise ist erfindungsgemäß erstmals ein voll kontinuierlicher, d. h. unterbrechungsfreier Betrieb einer solchen Vorrichtung zur Fest-Flüssig-Trennung von Stoffgemischen und Suspensionen möglich.

Die Erfindung wird im folgenden anhand des in der anliegenden Zeichnung dargestellten Ausführungsbeispieles näher erläutert. Es zeigt:
Fig. 1 eine erfindungsgemäße Vorrichtung zur Fest-Flüssig-Trennung von Stoffgemischen und Suspensionen von vorne, wobei eine der Press-Druck-Kammern geöffnet ist; und
Fig. 2 die Vorrichtung zur Fest-Flüssig-Trennung von Stoffgemischen und Suspensionen gemäß Fig. 1 von der gegenüberliegenden (Rück-) Seite.

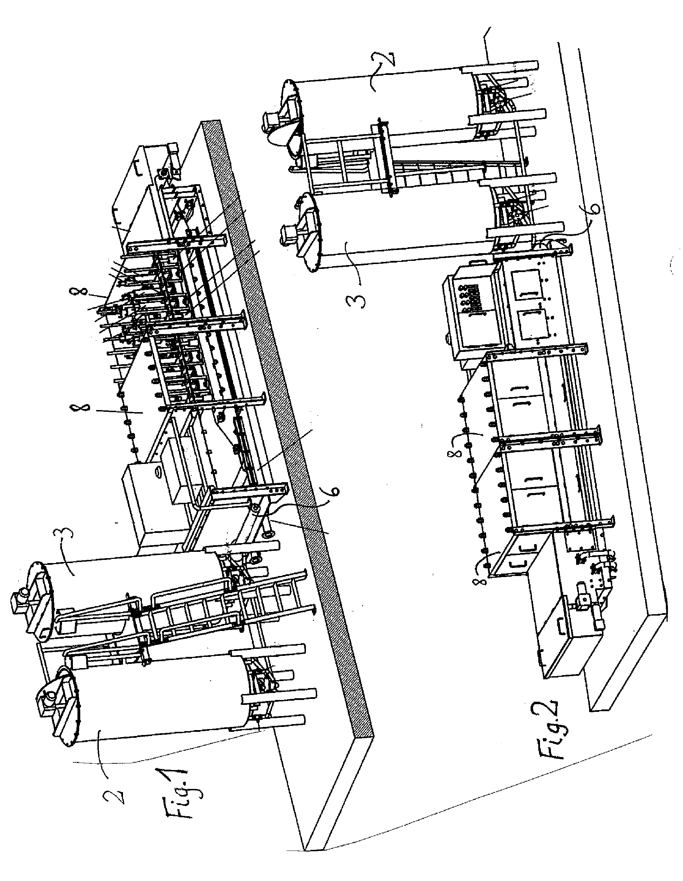

Fig. 1 zeigt eine erfindungsgemäße Vorrichtung zur Fest-Flüssig-Trennung von Stoffgemischen und Suspensionen von vorne. Von links nach rechts sind die beiden Filtrationskammern 2, 3 die Exzenterschneckenpumpe 6 und die Press-Druck-Kammern 8 erkennbar.

Die erfindungsgemäße Hochdruck-Filterpresse 10 hat zwei vertikale Filtrationskammern 2, 3 und 1 bis 8 horizontale Press-Druck-Kammern 8. Ohne Unterbrechung wird die Suspension während der gesamten Betriebszeit kontinuierlich wechselweise in die Filtrationskammern 2, 3 eingespeist und im 3 bis 12 Minuten-Takt wird aus den Press-Druck-Kammern 8 der Filterkuchen ausgetragen.

Die Entwässerung beginnt mit der Einspeisung in die Filtrationskammern 2, 3 und wird ohne Unterbrechung mit steigendem Druck in den Press-Druck-Kammern 8 fortgesetzt. Entsprechend dem Entwässerungsverhalten der Suspension werden Entwässerungszeiten und Druck in den Filtrations- und Press-Druck-Kammern verändert und angepasst. Die Entwässerungszeit in den Filtrationskammern beträgt 60 min., der hydrostatische Entwässerungs-druck - je nach Füllhöhe - bis 0,4 bar. Mit Abstreifern und Kontaktbürsten wird die Entwässerung aktiviert. Nach 60 min. Entwässerungszeit in der Filtrationskammer drückt eine regelbare Exzenterschneckenpumpe 6 die eingedickte Suspension taktweise in die Press-Druck-Kammern 8. Pumpendruck 1 bis 2 bar, Druckzeit 1 bis 2 min. Alle 60 min. wechselt die Einspeisung in die Filtrationskammern 2, 3. Das Filtertuch der inaktiven Kammer wird mit Waschwasser-Düsenstöcken beidseits gewaschen.

Jede Press-Druck-Kammer 8 ist ein komplettes Modul. Bis zu 8 Module sind horizontal in Reihe angeordnet, mit einem gemeinsamen Filterband. Die gleichzeitige Öffnungs- und Schließbewegung der Kammern zum Filterkuchenaustrag beträgt nur 100 mm und dauert 20 Sekunden. Das Filterband trägt den Filterkuchen horizontal aus und wird gleichzeitig beidseits gewaschen. Alle Bewegungen der Press-Druck-Kammern 8 - öffnen, schließen, abdichten sowie der Entwässerungspressdruck - erfolgen mit HydraulikZylindern.

Die Betriebszeit der erfindungsgemäßen Hochdruck-Filterpresse ist nicht begrenzt:
- Kontinuierliche Einspeisung ohne Unterbrechung,
- alle 3 bis 12 min. Filterkuchenaustrag.

Spezifischer Entwässerungsverlauf:
60 min. Filtrationskammer mit bis 0,4 bar hydro-statischem Druck,
1 bis 2 min. Press-Druck-Kammer mit 1 bis 2 bar Pumpendruck,
5 bis 10 min. Press-Druck-Kammer mit bis 40 bar Stahlplatten-Pressdruck, 66 bis 72 Minuten Gesamtentwässerungszeit.

Die Fest-Flüssig-Trennung ist eine Funktion von Druck und Zeit. Grundsätzlich ist das Ziel, ausgehend von einer Suspension, die flüssige und die feste Phase zu trennen.

Die Fest-Flüssig-Filtration ist in vielen industriellen Prozessen ein essentiell wichtiges Verfahren. Die Aufgabenstellung bestimmt dabei sowohl die optimale Auswahl des Filtrationsverfahrens als auch die anlagentechnische Konstellation. Gerade im Bereich der Produkt- und Wertstoffgewinnung steigen die Anforderungen hinsichtlich der Trennschärfe und Durchsatzleistung bei gleichzeitig hoher Betriebssicherheit kontinuierlich.

Der Fest-Flüssig-Anteil der Suspension ist sehr verschieden und bestimmt die Verfahrensweise der Maschinen zur Fest-Flüssig-Trennung.

Filterpressen sind Anlagen zur Fest-Flüssig-Trennung. Strömt eine Suspension gegen ein nur für Flüssigkeiten durchlässiges Textilgewebe (Filtertuch), werden Feststoffe an diesem zurückgehalten. Aus den ausgeströmten Feststoffen bildet sich mit fortlaufender Zeit ein Filterkuchen auf dem Filtertuch aus. Der Flüssiganteil der Suspension tritt durch das Filtertuch hindurch und wird als feststoff-freies Filtrat gewonnen. Filtertuch und Filterkuchen bilden einen Widerstand gegen die Strömung. Mit zunehmendem Aufbau des Filterkuchens wird immer größerer Druck notwendig, um diesen Widerstand zu überwinden.

Die erfindungsgemäße Anordnung von 2 Filtrationskammern, in die wechselweise die Suspension während einer Betriebszeit von z. B. 10 Stunden ohne Unterbrechung eingespeist wird, ermöglicht es, in den Filtrations- und Press-Druck-Kammern, gleichzeitig zu entwässernl

Der Fest-Flüssig-Anteil der Suspensionen ist sehr verschieden; der Feststoffanteil beträgt meist unter 10%, mineralisch, organisch oder gemischt, mit verschiedener Korngröße. Entsprechend ist die Zusammendrückbarkeit verschieden. Möglichst schnell sollte mit steigendem Druck die Feststoffkonzentration der Suspension erhöht werden. Nur eine kompakte Feststoffschicht kann mit starkem Pressdruck weiter behandelt werden.

In allen bisher bekannten Kammer- und Membranfilterpressen erfolgt dieser Vorgang - Filtration und anschließender Pressdruck - in einer gemeinsamen Kammer.

Die erfindungsgemäße Filterpresse arbeitet mit getrennten Kammern. Einer speziellen Filtrationskammer und einer speziellen Press-Druck-Kammer. Filtrationskammer geringer Druck, lange Zeit. Übergang in die Press-Druck-Kammer mit steigendem Pumpendruck. Press-Druck-Kammer hoher Druck, kurze Zeit.

Mit der erfindungsgemäßen Filterpresse lässt sich erstmals folgender Betriebsablauf realisieren:

Bei Betriebsbeginn erfolgt zuerst kontinuierliche Einspeisung in Filtrationskammer 2. Nach 60 min. Einspeisung wechseln in Filtrationskammer 3, Während der kontinuierlichen Einspeisung in Filtrationskammer 3, Taktabzug aus Filtrationskammer 2 und Pumpendruck-Einspeisung in die Pressdruck-Kammern. Wechselweise wird immer in eine Filtrationskammer eingespeist und aus der anderen Filtrationskammer taktweise abgezogen und in die Pressdruck-Kammern mit Pumpendruck diskontinuierlich eingespeist.

Der mit der vorliegenden Erfindung erstmals mögliche Betriebsablauf lässt sich daher gemäß der folgenden Tabelle über den Zeitverlauf darstellen:

| h | 1. Filtrationskammer | 2. Filtrationskammer | Pressdruck-Kammern |
|---|---|---|---|
| 1 | Einspeisung Entwässerung | - | - |
| 2 | Takt Abzug Entwässerung | Einspeisung Entwässerung | Takt. Einspeisung Entwässerung |
| | | | Takt Austrag Filterkuchen |
| 3 | Einspeisung Entwässerung | Takt Abzug Entwässerung | Takt Einspeisung Entwässerung |
| | | | Takt Austrag Filterkuchen |
| 4 | Takt Abzug Entwässerung | Einspeisung Entwässerung | Takt Einspeisung Entwässerung |
| | | | Takt Austrag Filterkuchen |
| 5 | Einspeisung Entwässerung | Takt Abzug Entwässerung | Takt Einspeisung Entwässerung |
| | | | Takt Austrag Filterkuchen |
| 6 | Takt Abzug Entwässerung | Einspeisung Entwässerung | Takt Einspeisung Entwässerung |
| | | | Takt Austrag Filterkuchen |
| 7 | Einspeisung Entwässerung | Takt Abzug Entwässerung | Takt Einspeisung Entwässerung |
| | | | Takt Austrag Filterkuchen |
| 8 | Takt Abzug Entwässerung | Einspeisung Entwässerung | Takt Einspeisung Entwässerung |
| | | | Takt Austrag Filterkuchen |
| 9 | Einspeisung Entwässerung | Takt Abzug Entwässerung | Takt Eingpeisung Entwässerung |
| | | | Takt Austrag Filterkuchen |
| 10 | Takt Abzug Entwässerung | - | Takt Einspeisung Entwässerung |
| | | | Takt Austrag Filterkucher |

## Patentansprüche

1. Vorrichtung zur Fest-Flüssig-Trennung von Stoffgemischen und Suspensionen mit einer Einspeisung und mindestens einer einspeisungsseitig angeordneten vertikalen Filtrationskammer (2, 3), an deren Ausgang mindestens eine Pumpvorrichtung (6) zum Abziehen des eingedickten Restvolumens aus der Filtrationskammer (2) und zum Erzeugen eines Pumpendrucks angeschlossen ist, und die Pumpvorrichtung (6) über Verbindungsleitungen (10) mit einer oder mehreren geschlossenen Press-Druck-Kammern (8) verbunden ist, **dadurch gekennzeichnet, dass**
zwei parallel geschaltete Filtrationskammern (2, 3) vorgesehen sind, die über Ventileinrichtungen jeweils einzeln eingangsseitig mit der Einspeisung und ausgangseitig über die Pumpvorrichtung (6) mit einer oder mehreren Press-Druck-Kammern (8) verbunden sind.
